# EUROPÄISCHE PATENTSCHRIFT

(11) **EP 3 034 844 B1**
(45) Veröffentlichungstag und Bekanntmachung des Hinweises auf die Patenterteilung: **15.05.2019**
(21) Anmeldenummer: 15003532.7
(22) Anmeldetag: 11.12.2015
(51) Int. Cl.: F02D 13/04, F02D 9/06, F02D 9/10, F02B 37/02, F01N 13/10

(54) **MOTORBREMSVORRICHTUNG FÜR EINE BRENNKRAFTMASCHINE SOWIE VERFAHREN ZUM BETREIBEN EINER MOTORBREMSVORRICHTUNG**
ENGINE BRAKING DEVICE FOR A COMBUSTION ENGINE AND METHOD FOR OPERATING AN ENGINE BRAKING DEVICE
DISPOSITIF DE FREINAGE POUR UN MOTEUR À COMBUSTION INTERNE ET PROCÉDÉ DE FONCTIONNEMENT D'UN DISPOSITIF DE FREINAGE

(30) Priorität: 15.12.2014 AT 9082014
(43) Veröffentlichungstag der Anmeldung: 22.06.2016
(73) Patentinhaber: MAN Truck & Bus Österreich AG, 4400 Steyr (AT)
(72) Erfinder: Rammer, Franz, 4493 Wolfern (AT); Raab, Gottfried, 4320 Perg (AT); Klinger, Heidrun, 4400 Steyr (AT); Leitenmayr, Franz, 4320 Perg (AT)
(74) Vertreter: Liebl, Thomas

(56) Entgegenhaltungen:
- EP-A1- 2 412 955
- EP-A2- 1 801 392
- EP-A2- 2 634 393
- DE-A1- 19 808 832

## Beschreibung

Die vorliegende Erfindung betrifft eine Motorbremsvorrichtung für eine Brennkraftmaschine in Kraftfahrzeugen, insbesondere in Nutzfahrzeugen, gemäß dem Oberbegriff des Patentanspruchs 1. Ferner betrifft die Erfindung ein Verfahren gemäß Anspruch 16 und ein Fahrzeug, insbesondere ein Nutzfahrzeug, nach dem Anspruch 19.

Es ist insbesondere bei luftverdichtenden (Diesel-) Brennkraftmaschinen in Nutzkraftfahrzeugen bekannt, im Schubbetrieb durch eine Bremsklappe im Abgassystem einen Abgasgegendruck zu erzeugen, der eine wirkungsvolle Motorbremsung bewirkt, indem die Kolben der Brennkraftmaschine im Ausstoßtakt (Auslassventile offen) gegen diesen Abgasdruck arbeiten.

Um die Wirkung einer solchen Motorbremsvorrichtung deutlich zu erhöhen, ist es allgemein bekannt, zusätzlich eine Dekompressionsbremse vorzusehen, bei der die Auslassventile überlagert zur regulären Ventilbetätigung nach dem Viertaktprinzip auch im Verdichtungstakt teilweise geöffnet sind. Die zusätzliche Bremswirkung entsteht hier durch das gedrosselte Abblasen der Verbrennungsluft in das Abgassystem.

Die Dekompressionsbremse kann entweder abgasgesteuert oder zwangsgesteuert sein. Im abgasgesteuerten Betrieb ist die Ventilsteuerung der Auslassventile so ausgelegt, dass die Auslassventile durch den bei geschlossener Bremsklappe vorliegenden Abgasgegendruck gezielt irregulär öffnen (sogenanntes Ventilspringen) und durch einen Mechanismus bis zur nächsten regulären Ventilöffnung offengehalten werden.

Bei einer zwangsgesteuerten Dekompressionsbremse wird zumeist hydraulisch und mechanisch in die reguläre Ventilsteuerung eingegriffen, um die Auslassventile zumindest auch im Verdichtungstakt gezielt teilweise offen zu halten.

Beispielsweise ist aus der AT 512 332 A1 eine in die Abgasturbine integrierte Drosseleinrichtung zum Steuer und/oder Regeln eines Motorbremsbetriebes bekannt, bei der eine Bremsklappe im Gehäuse der Abgasturbine unmittelbar im Mündungsbereich eines Einströmkanals der Abgasturbine in den ein Laufrad der Turbine aufnehmenden Laufrad-Aufnahmeraum eingesetzt ist. Eine derartige Maßnahme erfordert konstruktive Eingriffe in den Turbinenaufbau und ist daher relativ aufwendig.

Ähnliche Vorrichtungen sind aus der EP 2 412 955 A1 und EP 1 801 392 A2 bekannt.

Aufgabe der Erfindung ist es, eine Motorbremsvorrichtung für eine Brennkraftmaschine in Kraftfahrzeugen, insbesondere in Nutzfahrzeugen, vorzuschlagen, mit der die Motorbremsleisung einer Brennkraftmaschine mit Abgasturboaufladung auf konstruktiv einfache und funktionssichere Weise erhöht werden kann, wobei die Temperaturbelastung der Brennkraftmaschine im Motorbremsbetrieb möglichst niedrig gehalten werden soll.

Die Lösung dieser Aufgabe gelingt mit den Merkmalen der unabhängigen Ansprüche. Vorteilhafte Weiterbildungen der Erfindung sind Gegenstand der Unteransprüche.

Gemäß Anspruch 1 wird eine Motorbremsvorrichtung für eine Brennkraftmaschine in Kraftfahrzeugen, insbesondere in Nutzfahrzeugen, vorgeschlagen, die ein Ansaugsystem, ein Abgassystem, brennkraftmaschinenseitige (vorzugsweise im Viertaktprinzip gesteuerte) Gaswechselventile, eine Abgasturboaufladung mittels zumindest eines in das Abgassystem und das Ansaugsystem integrierten Abgasturboladers, sowie eine Motorbremseinrichtung aufweist, wobei die Motorbremseinrichtung eine wenigstens ein Auslassventil der Gaswechselventile beeinflussende Dekompressionsbremse und eine im Abgassystem angeordnete, das Abgas rückstauende Bremsklappe aufweist. Erfindungsgemäß wird vorgeschlagen, dass die Bremsklappe unmittelbar stromauf und außerhalb eines Turbinengehäuses einer Abgasturbine des Abgasturboladers (und damit stromauf eines turbinengehäuseseitigen Einströmkanals) angeordnet und als eine die Gasbeaufschlagung der Abgasturbine (positiv) beeinflussende Strömungsleitklappe ausgebildet ist. Damit gelingt es nahezu ohne baulichen Mehraufwand, den einlassseitigen Ladedruck im Motorbremsbetrieb stark anzuheben und somit den für die erzielbare Bremsleistung notwendigen Massendurchsatz in der Brennkraftmaschine zu erhöhen. Die Bremsklappe erfüllt somit mehrere Funktionen gleichzeitig: Sie sorgt bevorzugt geregelt für einen ausreichenden Abgasgegendruck und zusätzlich ähnlich der Funktion einer Regelklappe bei Abgasturbinen mit variabler Turbinengeometrie für eine vorteilhafte Anströmung der Turbine bei verringertem Abgasdurchsatz und geringerer Abgasenthalpie.

Konkret bewirkt dabei die stromauf der Abgasturbine angeordnete Bremsklappe im Gegensatz zu einer stromab der Abgasturbine angeordneten Bremsklappe ein höheres Druckgefälle über die Abgasturbine, wodurch, bedingt durch den dann möglichen höheren Massen- und Volumenstrom durch die Abgasturbine, der Ladedruck und der Abgasgegendruck deutlich erhöht werden kann und somit auch die Motorbremsleistung auf funktionssichere Weise ohne thermische Überlastung der Brennkraftmaschine deutlich gesteigert werden kann. Durch das Druckgefälle über die stromauf angeordnete Bremsklappe wird hierbei eine geringere Belastung der Abgasturbine bei gleichem Abgasgegendruck erzielt, was somit bei einer Steigerung des Abgasgegendrucks zur gewünschten Steigerung der Bremsleistung ohne höhere Belastung der Abgasturbine führt.

Die Anzahl der Bremsklappen richtet sich nach der Anzahl der Fluten der Abgasturbine, so dass dann bei mehrflutigen Ausgestaltungen jeder Flut eine eigene Bremsklappe zugeordnet ist, zum Beispiel bei einer zweiflutigen Ausgestaltung zwei Bremsklappen vorgesehen sind. Diese können grundsätzlich gleichzeitig betätigt werden, zum Beispiel auf einer gemeinsamen Welle angeordnet sein und somit gleichzeitig betätigt werden. Alternativ dazu können diese aber auch unabhängig voneinander angesteuert und damit betätigt werden.

Bei einer mehr-, insbesondere zweistufigen Aufladung wird die Bremsklappe bevorzugt stromauf einer in Strömungsrichtung gesehen ersten Abgasturbine eines ersten bzw. obersten Abgasturboladers angeordnet.

Die Abgasturbine kann grundsätzlich jede geeignete Turbine sein, insbesondere auch eine Abgasturbine mit variabler Turbinengeometrie (VTG-Lader).

Durch die Anordnung der wenigstens einen Bremsklappe stromauf und damit außerhalb eines Turbinengehäuses bzw. eines Einströmkanals der Abgasturbine bildet diese keinen Bestandteil der Abgasturbine, wodurch sich eine montageleichte Positionierung der Bremsklappe mit erhöhten konstruktiven Freiheitsgraden ergibt. Insbesondere können hier dann bauliche Eingriffe in die Abgasturbine vermieden werden und brauchen nicht eine Vielzahl unterschiedliche Turbinen für unterschiedliche Modellreihen vorgehalten werden. Gemäß einer hierzu besonders bevorzugten konkreten ersten Ausgestaltung kann die Abgasturbine, insbesondere ein Turbinengehäuse der Abgasturbine, hier dann mit einem, über wenigstens einen, vorzugsweise über mehrere, Zylinder der Brennkraftmaschine mit Abgas beaufschlagten Abgaskrümmer strömungstechnisch gekoppelt sein, wobei zwischen der Abgasturbine und dem Abgaskrümmer, insbesondere zwischen einem Turbinengehäuse der Abgasturbine und dem Abgaskrümmer, und damit unmittelbar stromauf und außerhalb eines Turbinengehäuses der Abgasturbine eine die Bremsklappe aufweisende separate Baueinheit verbaut ist, die sowohl mit dem Turbinengehäuse als auch mit dem Abgaskrümmer fest verbunden ist. Die wenigstens eine Bremsklappe bildet hier somit Bestandteil einer eigenen, separat verbaubaren Baueinheit bzw. Komponente mit einem eigenen Gehäuse aus, was die konstruktive Flexibilität erhöht und zudem keine baulichen Eingriffe an der Abgasturbine und an dem Abgaskrümmer erforderlich macht. Baulich besonders kompakt und vorteilhaft ist gemäß einer zweiten konkreten Ausführungsvariante vorgesehen, dass die Abgasturbine bzw. ein Abgasturbinengehäuse des Abgasturboladers unmittelbar an einen über wenigstens einen, vorzugsweise über mehrere, Zylinder der Brennkraftmaschine mit Abgas beaufschlagten Abgaskrümmer angebaut ist, wobei die Bremsklappe im Bereich des Abgaskrümmers und damit unmittelbar stromauf und außerhalb eines Turbinengehäuses der Abgasturbine angeordnet ist. Daraus resultiert somit eine für die Funktion der Abgasturbine nach wie vor günstige Anordnung mit zudem einer montageleichten Positionierung der Bremsklappe.

Funktionell besonders vorteilhaft kann die wenigstens eine, vorzugsweise ein-, gegebenenfalls auch mehrflügelig, ausgebildete, Bremsklappe im Bereich eines Anschlussflansches des Gehäuses der separaten Baueinheit bzw. des Abgaskrümmers, insbesondere an einem anschlussflanschseitigen Wandbereich des Gehäuses der separaten Baueinheit bzw. des Abgaskrümmers, und damit unmittelbar stromauf und außerhalb eines Turbinengehäuses, insbesondere stromauf und außerhalb eines Einströmkanals des Turbinengehäuses, angeordnet sein. Besonders bevorzugt ist hierbei eine konkrete Ausgestaltung, die der die Bremsklappe dergestalt schwenkbar im Bereich oder an einem Anschlussflansch des Gehäuses der separaten Baueinheit bzw. des Abgaskrümmers zur Abgasturbine angeordnet ist, dass sie im geöffneten Zustand den Abgasquerschnitt, vorzugsweise vollständig, freigibt und im mehr oder minder geschlossenen Zustand den Abgasquerschnitt gezielt vermindert. Die Bremsklappe ist dabei bevorzugt so nah an die Abgasturbine bzw. an deren Anschlussflansch herangerückt angeordnet, dass diese in einer definierten Offenstellung, insbesondere im vollständig geöffneten Zustand, wenigstens mit einem freien Endbereich über den Anschlussflansch hinaus in den Einströmkanal der Abgasturbine hineinragt, um somit möglichst nahe der Turbine wirkungsvoll deren Strömungsleitfunktion einzusetzen. Unter einer einflügeligen Ausgestaltung wird dabei insbesondere ein Aufbau verstanden, bei dem ein Flügel von der vorzugsweise endseitig angeordneten Schwenkachse mehr oder weniger maximal exzentrisch abragt, wodurch sich die Strömungsverhältnisse im Gegensatz zu zentrisch mehrflügeligen Ausgestaltungen wesentlich besser und mit erhöhter Flexibilität beeinflussen lassen. Zudem lässt sich die Schwenkachse derartiger einflügeliger Bremsklappen konstruktiv besonders einfach in einen Wandabschnitt des Abgaskrümmers integrieren. Grundsätzlich sind jedoch auch zentrisch mehrflügelige Ausgestaltungen möglich.

In einer vorteilhaften Weiterbildung der Erfindung kann die Bremsklappe im Motorbremsbetrieb abhängig vom Abgasgegendruck stromauf der Bremsklappe und/oder abhängig vom Ladedruck im Ansaugsystem der Brennkraftmaschine mittels einer Regel- und/oder Steuereinrichtung, insbesondere mittels eines elektronischen Motorsteuergeräts, gesteuert sein. Es hat sich gezeigt, dass damit höchste Motorbremsleistungen erzielbar sind, wobei die Ladedruckregelung besonders relevant ist.

Der Abgasgegendruck kann mittels eines Sensors, insbesondere mittels eines Drucksensors, erfasst werden, der funktionell stromauf der Bremsklappe angeordnet ist. Eine funktionelle Stromaufanordnung des Sensors bedeutet dabei, dass der Sensor nicht zwingend selbst unmittelbar dort angeordnet sein muss, sondern zur Verringerung von dessen thermischer Belastung auch davon entfernt und beabstandet angeordnet sein kann, wobei in diesem Fall dann der Sensor über eine stromauf der Bremsklappe in das Abgassystem mündende Leitung an den stromauf der Bremsklappe liegenden Bereich angeschlossen ist. Diese Leitung ist vorzugsweise als, bezogen auf eine Hochachsenrichtung, zum Sensor hin abfallende Leitung ausgebildet, was zum Beispiel hilft, eine für das Sensormessergebnis nachteilige Kondensatbildung zu verhindern bzw. wenigstens zu verringern.

Des Weiteren ist zur Erfassung des Ladedrucks vorzugsweise ein Sensor, insbesondere ein Drucksensor, stromab eines Verdichters im Bereich des Ansaugkrümmers angeordnet.

Des Weiteren kann die Betätigung der Bremsklappe über einen, vorzugsweise pneumatisch beaufschlagten, Steller bzw. Stellmotor und ein an diesen angeschlossenes Ventil, zum Beispiel ein Proportionalventil oder ein Taktventil, erfolgen. Damit gelingt es, mit konstruktiv gut beherrschbaren bzw. ohnehin im Fahrzeug vorhandenen Mitteln eine präzise Regelung der Motorbremsleistung durchzuführen. Alternativ dazu kann die Betätigung aber auch mittels eines von einer Steuer- und/oder Regeleinrichtung gesteuerten elektrischen Aktors erfolgen.

In einer weiteren, vorteilhaften Ausgestaltung der Erfindung kann der Steuer- und/oder Regeleinrichtung, insbesondere dem elektronischen Motorsteuergerät, wenigstens ein die Motorbremsung einleitendes Bremssignal (B) und/oder ein Lastsignal (a) und/oder der Wert des Abgasgegendrucks (PA) und/oder des Ladedrucks (PL) im Ansaugsystem zugeführt werden, wobei abhängig von der geforderten Motorbremsleistung zumindest die Stellung der Bremsklappe geregelt wird.

Ferner kann auch eine Abgasrückführung vom Abgassystem zum Ansaugsystem mit einem, vorzugsweise elektrisch oder pneumatisch gesteuerten, Abgasrückführventil in der Abgasrückführleitung vorgesehen sein.

Schließlich kann die Dekompressionsbremswirkung entweder durch den Abgasgegendruck oder durch eine der Ventilsteuerung der Brennkraftmaschine überlagerte, vorzugsweise elektrisch, pneumatisch oder hydraulisch gesteuerte, Vorrichtung gebildet sein.

Bevorzugt ist weiter vorgesehen, dass die Bremsklappe in ihrer Offenstellung den vollen Querschnitt der Ausströmöffnung zur Abgasturbine freigibt und in Zwischenstellungen bis hin zur vollen Schließung den Abgasstrom zum Turbinenrad der Abgasturbine derart ablenkt, dass der durch die Querschnittsverengung beschleunigte Abgasstrom das Turbinenrad antreibt. Mittels einer derartigen Beschleunigung des Abgasstroms kann die Motorbremswirkung im Motorbremsbetrieb deutlich verstärkt werden, da dadurch das Turbinenrad der Abgasturbine verstärkt durch den Abgasstrom angetrieben und somit auch der Ladeluftdruck erhöht wird.

Gemäß einer weiteren bevorzugten Ausführungsform ist die Bremsklappe in ihrer Offenstellung, in der sie den vollen Querschnitt der Ausströmöffnung freigibt, wenigstens bereichsweise oberflächenbündig mit einer Kanalwand eines die Ausströmöffnung ausbildenden Abgas-Strömungskanals angeordnet. Bevorzugt ist vorgesehen, dass die Bremsklappe in einer wandseitigen Vertiefung aufgenommen ist und/oder einliegt und im Wesentlichen oberflächenbündig an die unmittelbar an die Vertiefung angrenzenden Wandbereiche der Kanalwand eines die Ausströmöffnung ausbildenden Abgas-Strömungskanals anschließt. Hierdurch wird ein stetiger kantenfreier und im Wesentlichen glatter Wandbereich ausgebildet, der dazu beiträgt, den Strömungswiderstand zu verringern und einer Drosselwirkung der Bremsklappe entgegenzuwirken.

Auch wenn die Erfindung vorstehend stets in Verbindung mit einer Bremsklappe erläutert worden ist, ist dieser Begriff "Bremsklappe" ausdrücklich in einem weiten und umfassenden Sinne zu verstehen und nicht nur auf schwenkbare Klappenanordnung beschränkt. So sollen von dem Begriff "Bremsklappe", sofern dies nicht anders erläutert ist, ausdrücklich auch jedwede andere geeignete und/oder nicht schwenkbare Drosseleinrichtungen, wie zum Beispiel Schieber oder Drehschieber, umfasst sein.

Zur Lösung der bereits genannten Aufgabe wird ferner ein Verfahren zum Betreiben einer Motorbremsvorrichtung für eine Brennkraftmaschine in Kraftfahrzeugen vorgeschlagen, wobei die Motorbremsvorrichtung ein Ansaugsystem, ein Abgassystem, brennkraftmaschinenseitige Gaswechselventile, eine Abgasturboaufladung mittels zumindest eines in das Abgassystem und das Ansaugsystem integrierten Abgasturboladers sowie eine Motorbremseinrichtung aufweist, wobei die Motorbremsvorrichtung eine wenigstens ein Auslassventil der Gaswechselventile beeinflussende Dekompressionsbremse und eine im Abgassystem angeordnete, das Abgas rückstauende Bremsklappe aufweist. Erfindungsgemäß ist die Bremsklappe unmittelbar stromauf und außerhalb eines Turbinengehäuses einer Abgasturbine des Abgasturboladers angeordnet. Zudem bildet die Bremsklappe eine Strömungsleitklappe aus, mittels der die Abgasturbine in Abhängigkeit von der Stellung der Bremsklappe mit einem definierten Gasstrom beaufschlagt wird.

Die sich durch die erfindungsgemäße Verfahrensführung ergebenden Vorteile sind identisch mit den bereits gewürdigten Vorteilen der erfindungsgemäßen Vorrichtung und werden an dieser Stelle nicht wiederholt. Insofern wird auf die zuvor gemachten Ausführungen verwiesen.

Erfindungsgemäß wird die Bremsklappe im Motorbremsbetrieb in wenigstens einer definierten Zwischenstellung zwischen der Offenstellung und der Schließstellung der Bremsklappe angeordnet, in der die Bremsklappe einen definierten Strömungsquerschnitt freigibt und in der der Strömungsquerschnitt in Abgas-Strömungsrichtung mittels der Bremsklappe düsenartig verringert ist, so dass der an der Bremsklappe vorbeiströmende Abgasstrom beschleunigt wird. In dieser Zwischenstellung wird das Turbinenrad der Abgasturbine im Motorbremsbetrieb durch den Abgasstrom verstärkt angetrieben und ist der Ladeluftdruck und schließlich auch die Motorbremsleistung erhöht. Bevorzugt ist dabei vorgesehen, dass die Bremsklappe in der Schließstellung den Abgas-Strömungskanal vollständig versperrt bzw. keinen Strömungsquerschnitt freigibt.

Erfindungsgemäß gibt die in der Zwischenstellung angeordnete Bremsklappe einen Strömungsquerschnitt frei, der in einem Bereich von 0,1% bis 20%, bevorzugt von 1% bis 12%, besonders bevorzugt von 1,3% bis 11,1%, des maximalen Strömungsquerschnitts liegt. Auf diese Weise werden im Motorbremsbetrieb ein effektiver Antrieb des Turbinenrads und gleichzeitig auch ein hoher Abgasdruckgegendruck erreicht. Insbesondere wird hierdurch der Ladedruckaufbaupositiv beeinflusst, weil die Strömungsgeschwindigkeit mit zunehmend schließender Bremsklappe erhöht wird. Andererseits darf aber auch der Massenstrom nicht zu stark gedrosselt werden. Mit den obigen besonders bevorzugten Werten erhält man ein Optimum dieser beiden Effekte bezüglich des Ladedruckaufbaus.

In einer bevorzugten konkreten Ausgestaltung gibt die Bremsklappe im Nicht-Motorbremsbetrieb einen ersten Strömungsquerschnitt, insbesondere den maximalen bzw. vollen Strömungsquerschnitt, frei, während die die Bremsklappe im Motorbremsbetrieb, insbesondere in Abhängigkeit von wenigstens einem Parameter, einen kleiner als der erste Strömungsquerschnitt ausgebildeten zweiten Strömungsquerschnitt freigibt oder den Abgas-Strömungskanal vollständig versperrt.

Bezüglich der sich mit dem erfindungsgemäßen Fahrzeug ergebenden Vorteile wird auf die zuvor gemachten Ausführungen verwiesen.

Ein Ausführungsbeispiel der Erfindung ist im Folgenden mit weiteren Einzelheiten näher erläutert.

Es zeigen:
- Fig. 1: in nur skizzenhafter Darstellung eine Brennkraftmaschine für ein Nutzfahrzeug mit einem Ansaugsystem, einem Abgassystem, einem Abgasturbolader und einer Motorbremsvorrichtung mit einer Bremsklappe stromauf der Abgasturbine, die über ein elektronisches Motorsteuergerät gesteuert ist;
- Fig. 2: in einer raumbildlichen, teils aufgebrochenen Darstellung die Abgasturbine des Abgasturboladers mit im Anschlussbereich am Abgaskrümmer positionierter Bremsklappe;
- Fig. 3: eine Grafik zur mit der Motorbremsvorrichtung nach den Fig. 1 und 2 erzielbaren Motorbremsleistung in Prozent, aufgetragen über der Drehzahl der Brennkraftmaschine;
- Fig. 4: eine weitere Grafik mit Darstellung des über einen Sensor erfassten, mittleren relativen Abgasgegendrucks in bar;
- Fig. 5: eine Grafik über den relativen Ladedruckverlauf (in bar) über die Drehzahl der Brennkraftmaschine;
- Fig. 6: eine Schnittdarstellung durch die Abgasturbine und den Abgaskrümmer mit der Bremsklappe in einer Offenstellung; und
- Fig. 7: eine Darstellung gemäß Fig. 6 mit der Bremsklappe in einer Zwischenstellung.

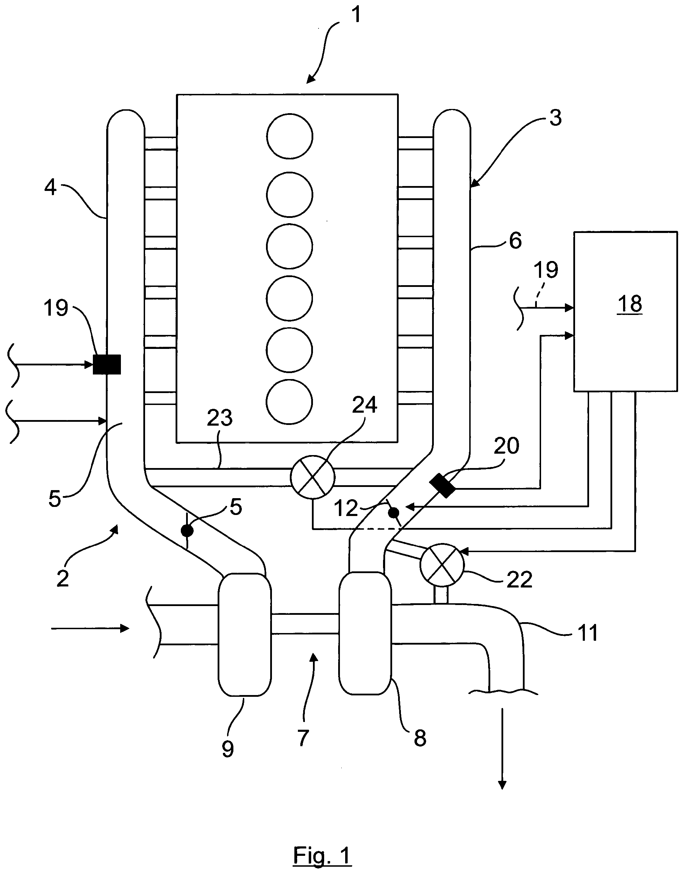

In der Fig. 1 ist nur skizzenhaft eine Brennkraftmaschine 1 (zum Beispiel eine Sechszylinder-Diesel-Brennkraftmaschine) für ein Kraftfahrzeug, insbesondere für ein Nutzfahrzeug, dargestellt, mit einem Ansaugsystem 2 und einem Abgassystem 3 (soweit nicht beschrieben üblicher Bauart). Im Ansaugkrümmer 4 des Ansaugsystems 2 kann gegebenenfalls eine Drosselklappe 5 vorgesehen sein.

Das Abgassystem 3 weist einen an die Brennräume der Brennkraftmaschine 1 angeschlossenen Abgaskrümmer 6 auf, der in noch zu beschreibender Weise an die Abgasturbine 8 eines Abgasturboladers 7 angeschlossen ist. Die Abgasturbine 8 treibt in bekannter Weise einen Verdichter 9 an, der über eine Leitung 10 mit dem Ansaugkrümmer 4 verbunden ist und der Verbrennungsluft unter einem definierten Ladedruck PL zu den Brennräumen der Brennkraftmaschine 1 fördert. Das über den Abgaskrümmer 3 und die Abgasturbine 8 abströmende Abgas wird über eine Abgasleitung 11 weiter abgeführt. Die weiteren Leitungen des Ansaugsystems 2 und des Abgassystems 3 der Brennkraftmaschine 1 im Kraftfahrzeug sind nicht dargestellt.

Als Motorbremsvorrichtung weist die Brennkraftmaschine 1 eine Dekompressionsbremse (nicht dargestellt) auf, die auf die Gaswechselventile bzw. die Auslassventile der Brennkraftmaschine 1 wirkt. Ferner ist eine Bremsklappe 12 stromauf der Abgasturbine 8 vorgesehen, mittels der ein definierter Abgasgegendruck PA erzeugt werden kann.

Die Dekompressionsbremse kann in bekannter Weise gasgesteuert über den erhöhten Abgasgegendruck PA bei zumindest teilweise geschlossener Bremsklappe 12 initiiert werden, bei dem gezielt ein "Flattern" oder "Ventilspringen" der Auslassventile ausgelöst wird (zum Beispiel DE 10 2008 061 412 A1) oder es kann eine dem Ventiltrieb überlagerte, mechanisch-hydraulische Öffnung der Auslassventile (Zwangssteuerung) im Verdichtungstakt der Brennkraftmaschine gesteuert sein (vgl. DE 39 22 884 A1).

Hinsichtlich der detaillierten Ausführung der Dekompressionsbremsen wird hilfsweise auf die genannten Veröffentlichungen verwiesen.

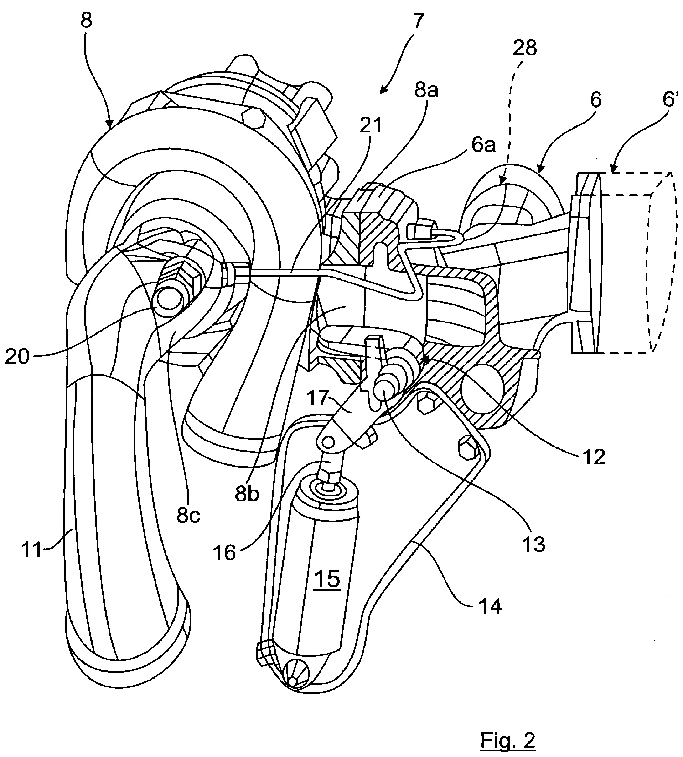

Die Fig. 2 zeigt eine bevorzugte Ausgestaltung der im Abgaskrümmer 6 stromauf und nahe der Abgasturbine 8 des Abgasturboladers 7 angeordneten Bremsklappe 12, die im Bereich bzw. an dem Anschlussflansch 6a des Abgaskrümmers 6, hier konkret an einem unteren Wandabschnitt des Anschlussflansches 6a des Abgaskrümmers 6, über eine Welle 13, schwenkbar gelagert ist. Auch wenn hier nur eine Abgasturbine mit einer Flut gezeigt ist, kann die Abgasturbine grundsätzlich auch mehrflutig, zum Beispiel zweiflutig, ausgebildet sein. In diesem Fall hat man sich dann die zum Beispiel zweite Flut entsprechend ausgestaltet vorzustellen mit jeweils einer Bremsklappe 12 für jede Flut, wobei die Bremsklappen 12 dann allesamt unabhängig voneinander gesteuert werden können oder aber auch über eine gemeinsame Welle (zum Beispiel die Welle 13) gemeinsam gesteuert bzw. betätigt werden können.

Die hier beispielhaft einflügelig, das heißt maximal exzentrisch ausgeführte und auf der drehbar gelagerten Welle 13 befestigte Bremsklappe 12 ist zugleich als Strömungsleitelement ausgebildet, indem sie in der Offenstellung den vollen Querschnitt der Ausströmöffnung zur Abgasturbine 8 freigibt und in Zwischenstellungen bis hin zur vollen Schließung den Abgasstrom zum Turbinenrad (nicht ersichtlich) der Abgasturbine 8 derart ablenkt, dass der durch die Querschnittsverengung beschleunigte Abgasstrom das Turbinenrad ähnlich der Funktion einer variablen Turbinengeometrie bzw. gegebenenfalls in Stoßaufladung verstärkt antreibt.

Die Bremsklappe 12 ragt dabei, wie aus der den geöffneten Zustand zeigenden Fig. 2 ersichtlich, in der hier gezeigten vollständig geöffneten Stellung mit ihrem freien Endbereich über den Anschlussflansch 6a hinaus, zum Beispiel um etwa deren halben Länge, in den Einströmkanal 8b der Abgasturbine 8 bzw. deren Anschlussflansch 8a bis nahe zum Turbinenrad hinein, um die positiv wirkende Anströmung zu verstärken.

Alternativ zur eben beschriebenen Integration in den Abgaskrümmer 6 kann die Bremsklappe 12 aber auch, wie dies in der Fig. 2 lediglich äußerst schematisch sowie strichliert dargestellt ist, Bestandteil einer, die Bremsklappe 12 aufweisenden separaten Baueinheit 28 sein, die zwischen dem Turbinengehäuse der Abgasturbine 8 und dem sich dann an die separate Baueinheit 28 anschließenden Abgaskrümmer 6' verbaut ist und die sowohl mit dem Turbinengehäuse der Abgasturbine 8 als auch mit dem Abgaskrümmer 6' fest verbunden ist. Die wenigstens eine Bremsklappe bildet hier somit Bestandteil einer eigenen, separat verbaubaren Baueinheit 28 bzw. Komponente mit einem eigenen Gehäuse. Ansonsten ist der Aufbau bzw. die Funktionsweise identisch mit demjenigen bzw. derjenigen, wie er bzw. sie zuvor bereits geschildert worden ist.

Am Abgaskrümmer 6 ist ferner eine Halterung 14 befestigt, die ein zum Beispiel pneumatisches Stellglied 15 (zum Beispiel eine Kolben-Zylinder-Einheit) als Steller trägt, mittels dem über eine Kolbenstange 16 und einen Hebel 17 die Bremsklappe 12 betätigbar ist. Das Stellglied 15 kann mittels eines an eine Druckmittelquelle angeschlossenen Ventils (nicht dargestellt), zum Beispiel mittels eines Proportionalventils oder eines Taktventils, präzise in Stellungen zwischen offen und voll geschlossen beaufschlagt werden. Auch der Einsatz eines elektrischen Aktors wäre grundsätzlich ebenso möglich.

Zur vorteilhaften Verstellung bzw. Regelung der Bremsklappe 12 im Motorbremsbetrieb (vgl. auch Fig. 1) ist vorzugsweise ein elektronisches Motorsteuergerät 18 als Steuer- und/oder Regelvorrichtung vorgesehen, dem vorzugsweise neben den üblichen Betriebsparametern der Brennkraftmaschine (Drehzahl, Temperatur, etc.) zumindest ein Signal B als Motorbremssignal und ein Lastsignal α zugeführt werden.

Des Weiteren werden über vorzugsweise als Drucksensoren ausgebildete Sensoren 19, 20 der Wert des Ladedrucks PL im Ansaugkrümmer 4 sowie der Wert des Abgasgegendrucks PA im Abgaskrümmer 6 erfasst und über entsprechende Signalleitungen (ohne Bezugszeichen) zum Steuergerät 18 geführt.

Der Sensor 20, vorzugsweise ein Drucksensor, im Abgaskrümmer 6 ist funktionell stromauf der Abgasturbine 8 angeordnet. Dies zeigt die Fig. 1 in abstrakter Weise. In der konstruktiven Ausgestaltung (Fig. 2) ist der Sensor 20 aus thermischen Gründen nicht selbst unmittelbar und direkt stromauf der Bremsklappe 12 im Abgaskrümmer 6 angeordnet, sondern beabstandet und entfernt davon an einer Gehäuseanformung 8c angeordnet sowie über eine Leitung 21 mit dem Abgaskrümmer 6 stromauf der Bremsklappe 12 verbunden. Diese Leitung 21 ist hier bevorzugt als, bezogen auf eine Hochachsenrichtung, zum Sensor 20 hin abfallende Leitung 21 ausgebildet. Die Gehäuseanformung 8c ist selbstverständlich im Betriebszustand kälter als der stromauf der Bremsklappe 12 liegende Bereich des Abgaskrümmers 6, in den die Leitung 21 einmündet.

Der Abgasturbolader 7 kann optional ein Bypassventil 22 aufweisen, mit dem zur Vermeidung eines zu hohen Ladedrucks PL Abgas an dem Turbinenrad der Abgasturbine 8 vorbeiführbar ist. Das Bypassventil 22 kann in die Abgasturbine 8 direkt integriert sein und ist deshalb in der Darstellung gemäß Fig. 2 nicht ersichtlich.

Ferner kann die Brennkraftmaschine 1 ebenfalls rein optional eine Abgasrückführleitung 23 zwischen dem Ansaugsystem 4 und dem Abgassystem 3 aufweisen, in der ein über das Motorsteuergerät 18 steuerbares Abgasrückführventil 24 vorgesehen ist. Die Mündung der Abgasrückführleitung 23 in den Abgaskrümmer 6 liegt wie aus Fig. 1 ersichtlich ist vorzugsweise stromauf der Bremsklappe 12. Die Mündung der Abgasrückrührleitung 23 in den Ansaugkrümmer 4 erfolgt vorzugsweise stromab der optionalen Drosselklappe 5.

Eine Motorbremsung im Schubbetrieb des Kraftfahrzeugs wird insbesondere durch das Signal B initiiert und bewirkt ein definiertes Schließen der Bremsklappe 12, abhängig unter anderem von der Drehzahl der Brennkraftmaschine und gegebenenfalls von der Anforderung der gewünschten Bremsleistung. Ferner kann temperaturabhängig gegebenenfalls ein Schließen des Abgasrückführventils 24 gesteuert sein.

Die Schließstellung der Bremsklappe 12 definiert sich weiterhin aus dem Ladedruck PL im Ansaugkrümmer 4 und dem Abgasgegendruck PA im Abgaskrümmer 6 der Brennkraftmaschine.

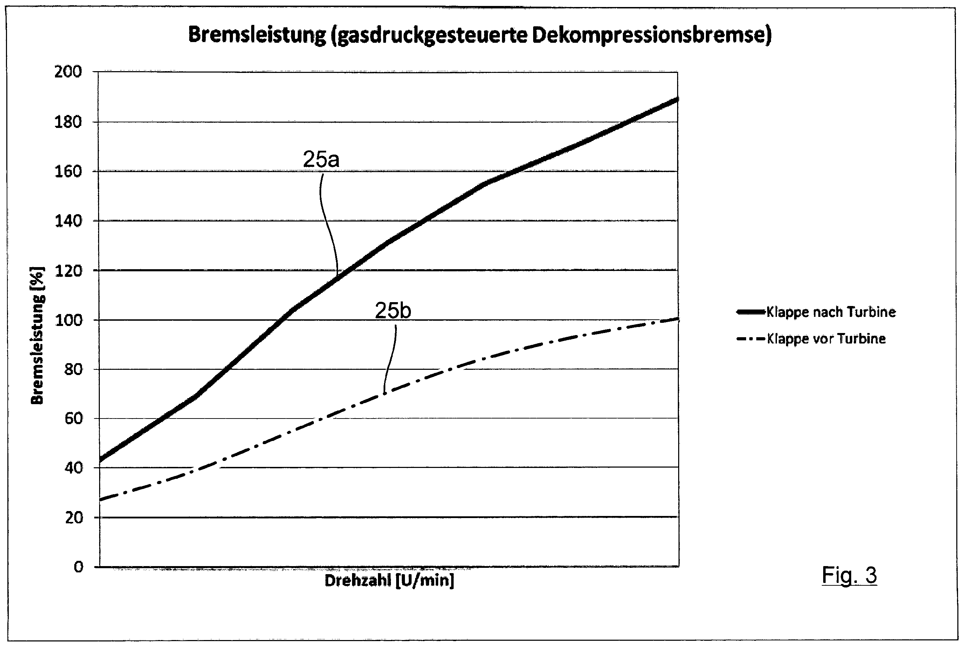

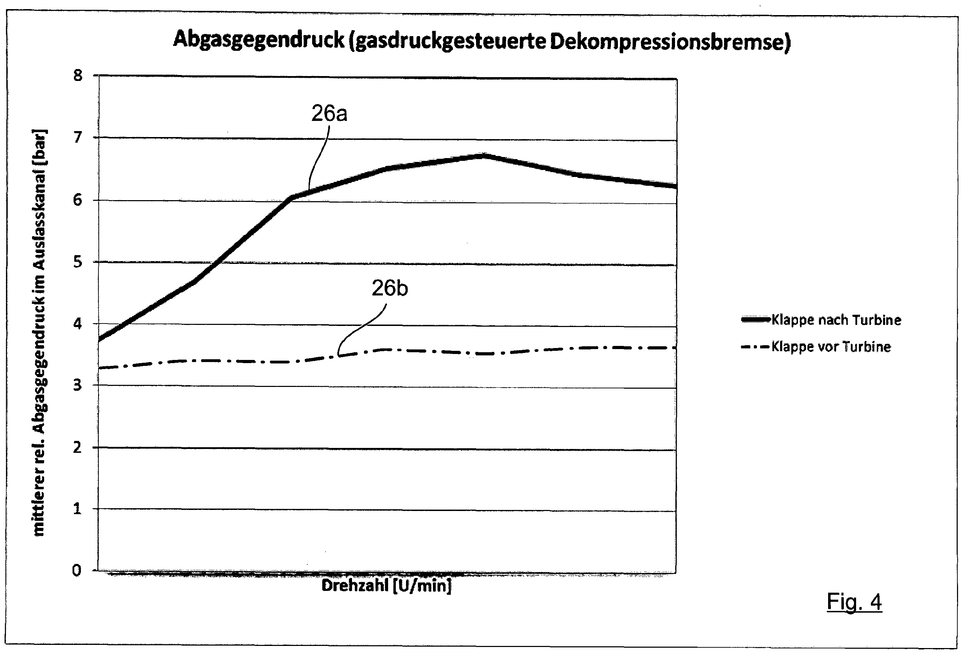

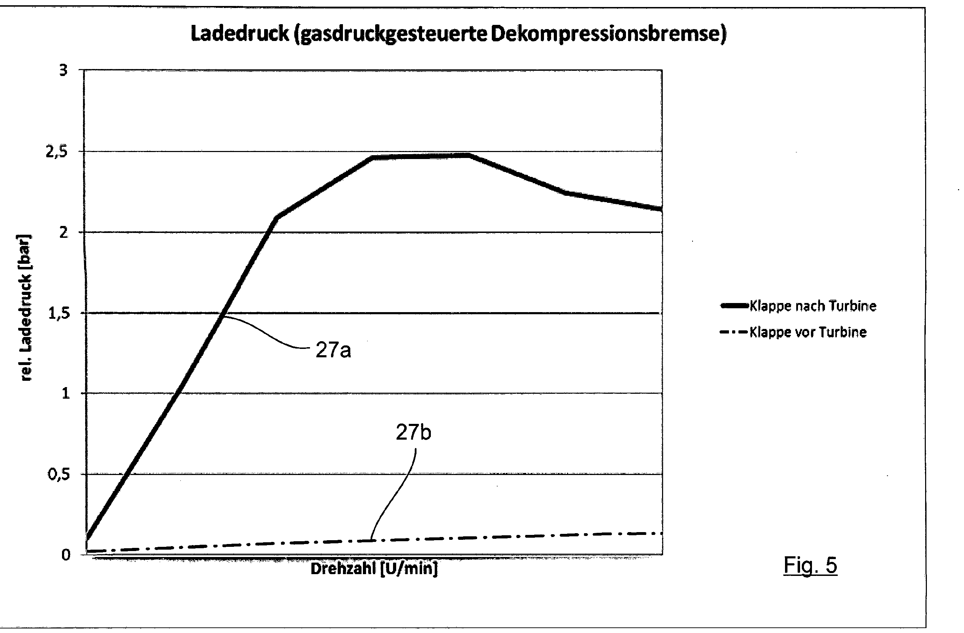

Die Fig. 3 bis 5 zeigen in entsprechenden Grafiken gemessene Werte bei einer hier beispielhaft gasdruckgesteuerten Dekompressionsbremse und geregelter Bremsklappe 12, jeweils über der Drehzahl n der Brennkraftmaschine 1 und betreffend die erzielbare, spezifische Bremsleistung (Fig. 3, Kurve 25a), in Fig. 4 den vorherrschenden Abgasgegendruck PA (Kurve 26a) und in Fig. 5 den Ladedruckverlauf PL (Kurve 27a), jeweils im Vergleich zu einer herkömmlichen Anordnung und Ausgestaltung der Bremsklappe 12 stromab der Abgasturbine (Kurven 25b, 26b, 27b).

Wie den Grafiken ohne weiteres entnehmbar ist, ist die Motorbremsleistung bei einer erfindungsgemäßen Brennkraftmaschine 1 mit Abgasturboaufladung 7 signifikant erhöht (Kurve 25a). Gleiches gilt für den vorherrschenden Abgasgegendruck (Kurve 26a).

Zudem weisen beide auf der erfindungsgemäßen Lösung basierenden Kurven 25a, 26a jeweils einen stark ansteigenden Gradienten auf.

Insbesondere aber beachtlich und für die wesentliche Steigerung der spezifischen Motorbremsleistung (Kurve 25a) maßgeblich ist der schon bei niedrigen Drehzahlen n der Brennkraftmaschine 1 steil ansteigende Ladedruck PL (Kurve 27a), der sich durch die erfindungsgemäße Bremsklappe 12 mit entsprechender Strömungsleitfunktion einstellt.

Wie die Diagramme deutlich zeigen, wird mit der erfindungsgemäßen Bremsklappenanordnung stromauf der Abgasturbine, im Vergleich zu einer stromab der Abgasturbine angeordneten Bremsklappe, bedingt durch den deutlich gesteigerten Abgasgegendruck eine wesentlich höhere Motorbremsleistung erzielt, wobei es trotz der deutlich gestiegenen Motorbremsleistung zu keiner höheren thermischen Belastung der Brennkraftmaschine kommt.

Obwohl die gemessenen Werte an einer Brennkraftmaschine 1 mit einer gasdruckgesteuerten Dekompressionsbremse festgestellt wurden, sind sie auch für Brennkraftmaschinen 1 mit Abgasturboaufladung und Verwendung einer zwangsgesteuerten Dekompressionsbremse gleichermaßen relevant bzw. gültig.

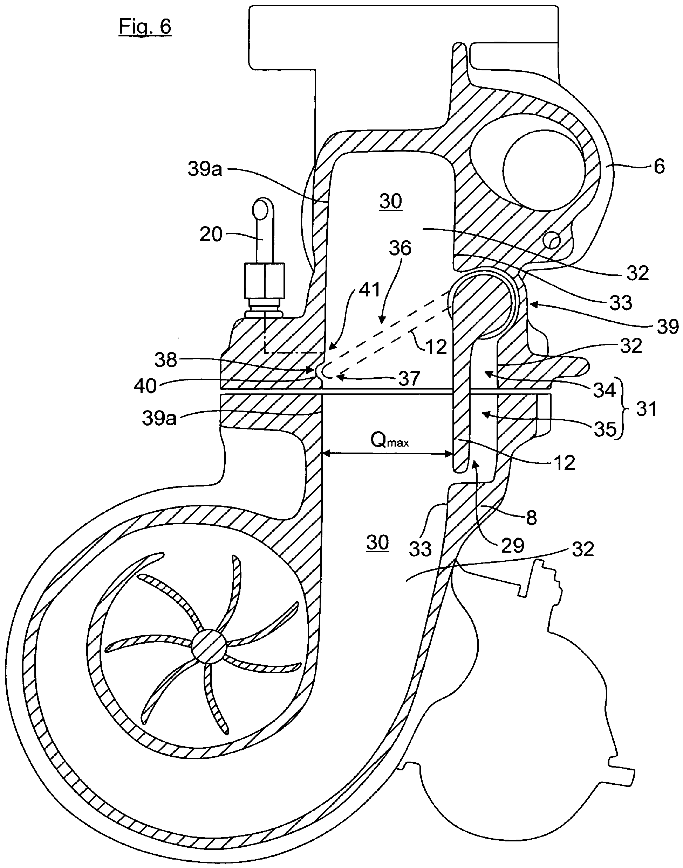

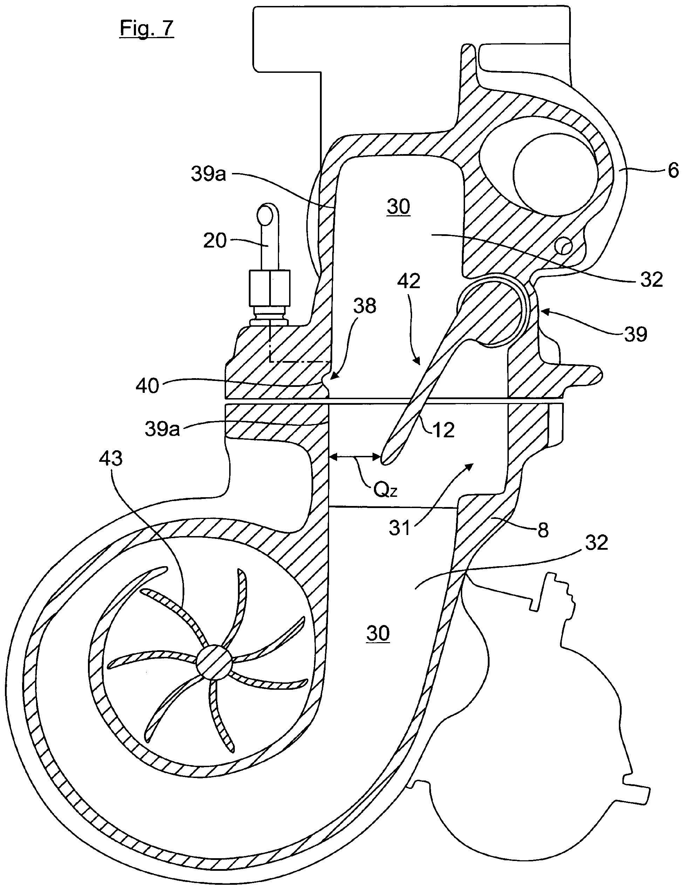

In Fig. 6 und Fig. 7 ist jeweils ein Schnitt durch den Abgaskrümmer 6 und die Abgasturbine 8 des Abgasturboladers 7 gezeigt, mit dem die Funktionsweise der Bremsklappe 12 nochmals näher erläutert wird. In Fig. 6 ist die Bremsklappe 12 in ihrer Offenstellung 29 gezeigt, in der die Bremsklappe 12 beispielsweise im Normalbetrieb bzw. im Nicht-Motorbremsbetrieb angeordnet wird. In dieser Offenstellung 29 gibt die Bremsklappe 12 hier beispielhaft den vollen bzw. den maximalen Strömungsquerschnitt Qₘₐₓ eines durch den Abgaskrümmer 6 und die Abgasturbine 8 gebildeten Abgas-Strömungskanals 30 frei, der hier zudem die Ausströmöffnung ausbildet.

Dabei liegt die Bremsklappe 12 hier beispielhaft derart in einer Vertiefung 31 einer Kanalwand 32 des Abgas-Strömungskanals 30 ein, dass diese im Wesentlichen oberflächenbündig an die unmittelbar an die Vertiefung 31 angrenzenden Wandbereiche 33 der Kanalwand 32 anschließt. Auf diese Weise wird mittels der Bremsklappe 12 ein kontinuierlicher Übergang zwischen den Wandbereichen 33 der Kanalwand 32 realisiert, mit dem ein besonders geringer Strömungswiderstand sichergestellt wird. Die Vertiefung 31 weist hier beispielhaft einen abgaskrümmerseitigen Bereich 34 und einen abgasturbinenseitigen Bereich 35 auf.

Des Weiteren ist in Fig. 6 auch mit gestrichelten Linien eine Schließstellung 36 der Bremsklappe 12 angedeutet, in der die Bremsklappe 12 beispielsweise im Motorbremsbetrieb angeordnet wird. In dieser Schließstellung 36 versperrt die Bremsklappe 12 hier beispielhaft den Abgas-Strömungskanal 30 vollständig, so dass das Abgas hier maximal rückgestaut wird. In der Schließstellung 36 liegt ist die Bremsklappe 12 hier beispielhaft mit einem freien Endbereich 37 in einer Vertiefung 38 an der Kanalwand 32 ein. Die Vertiefung 38 ist hier beispielhaft an einem gegenüberliegend zu einem Fixierbereich 39 der Bremsklappe 12 angeordneten Wandbereich 39a der Kanalwand 32 ausgebildet. Zudem ist die Vertiefung 38 hier beispielhaft abgaskrümmerseitig angeordnet. Alternativ wäre es natürlich aber auch denkbar, dass die Vertiefung 38 abgasturbinenseitig angeordnet ist.

Weiter ist die Vertiefung 38 hier derart konturangepasst zu dem Endbereich 37 der Bremsklappe 12 ausgebildet, dass die Bremsklappe 12 in der Schließstellung 36 mit ihrem Endbereich 37 in einer flächigen Anlage mit einem die Vertiefung 38 bildenden Vertiefungs-Wandbereich 40 ist. Dadurch wird das Abgas in der Schließstellung 36 der Bremsklappe 12 besonders effektiv rückgestaut. Zudem ist die Vertiefung 38 hier, in Abgas-Strömungsrichtung gesehen, stromab einer Messstelle 41 des Drucksensors 20 angeordnet.

In Fig. 7 ist die Bremsklappe 12 in einer Zwischenstellung 42 zwischen der Offenstellung 29 und der Schließstellung 36 gezeigt, in der die Bremsklappe 12 beispielsweise ebenfalls im Motorbremsbetrieb angeordnet wird. In dieser Zwischenstellung 42 gibt die Bremsklappe 12 hier einen kleiner als der maximale Strömungsquerschnitt Qₘₐₓ ausgebildeten Strömungsquerschnitt Q_{Z} frei. Zudem ist die Bremsklappe 42 in der Zwischenstellung 42 derart angeordnet, dass sich der Strömungsquerschnitt des Abgas-Strömungskanals 30 in Abgas-Strömungsrichtung mittels der Bremsklappe 12 düsenartig verringert und der an der Bremsklappe 12 vorbeiströmende Abgasstrom beschleunigt wird. Auf diese Weise wird erreicht, dass ein Turbinenrad 43 der Abgasturbine 8 auch im Motorbremsbetrieb durch den Abgasstrom angetrieben wird, wodurch sich der Ladeluftdruck und schließlich auch die Motorbremsleistung erhöht.

Bevorzugt gibt die in der Zwischenstellung 42 angeordnete Bremsklappe 12 dabei 0,1% bis 20%, besonders bevorzugt 1,3% bis 11,1%, des maximalen Strömungsquerschnitts Qₘₐₓ frei, um im Motorbremsbetrieb einen effektiven Antrieb des Turbinenrads 43 und gleichzeitig auch einen hohen Abgasdruckgegendruck sicherzustellen.

### Bezugszeichenliste

- 1: Brennkraftmaschine
- 2: Ansaugsystem
- 3: Abgassystem
- 4: Ansaugkrümmer
- 5: Drosselklappe
- 6: Abgaskrümmer
- 6a: Anschlussflansch
- 7: Abgasturbolader
- 8: Abgasturbine
- 8a: Anschlussflansch
- 8b: Einströmkanal
- 8c: Anformung
- 9: Verdichter
- 10: Ansaugleitung
- 11: Abgasleitung
- 12: Bremsklappe
- 13: Welle
- 14: Halter
- 15: Stellglied
- 16: Stellkolben
- 17: Hebel
- 18: Motorsteuergerät
- 19: Drucksensor
- 20: Drucksensor
- 21: Leitung
- 22: Bypassventil
- 23: Abgasrückführleitung
- 24: Abgasrückführventil
- 25: Kurve Bremsleistung
- 26: Kurve Abgasgegendruck PA
- 27: Kurve Ladedruck PL
- 28: separate Baueinheit
- 29: Offenstellung
- 30: Abgas-Strömungskanal
- 31: Vertiefung
- 32: Kanalwand
- 33: Wandbereich
- 34: abgaskrümmerseitiger Bereich
- 35: abgasturbinenseitiger Bereich
- 36: Schließstellung
- 37: Endbereich
- 38: Vertiefung
- 39: Fixierbereich
- 39a: Wandbereich
- 40: Vertiefungs-Wandbereich
- 41: Messstelle
- 42: Zwischenstellung
- 43: Turbinenrad
- Qₘₐₓ: maximaler Strömungsquerschnitt
- Qz: Strömungsquerschnitt Zwischenstellung

## Patentansprüche

1. Motorbremsvorrichtung für eine Brennkraftmaschine (1) in Kraftfahrzeugen, die ein Ansaugsystem (2), ein Abgassystem (3), brennkraftmaschinenseitige Gaswechselventile, eine Abgasturboaufladung mittels zumindest eines in das Abgassystem (3) und das Ansaugsystem (2) integrierten ein- oder mehrflutig ausgebildeten Abgasturboladers (7) sowie eine Motorbremseinrichtung aufweist, wobei die Motorbremseinrichtung eine wenigstens ein Auslassventil der Gaswechselventile beeinflussende Dekompressionsbremse und jede Flut eine im Abgassystem angeordnete, das Abgas rückstauende Bremsklappe (12) aufweist, und wobei die Bremsklappe (12) unmittelbar stromauf und außerhalb eines Turbinengehäuses einer Abgasturbine (8) des Abgasturboladers (7) angeordnet ist, **dadurch gekennzeichnet, dass** die Bremsklappe (12) als eine die Beaufschlagung der Abgasturbine (8) mit einem Gasstrom beeinflussende Strömungsleitklappe ausgebildet ist, die im Motorbremsbetrieb in einer Zwischenstellung (42) zwischen einer Offenstellung (29) und einer Schließstellung (36) angeordnet ist, in der die Bremsklappe (12) einen kleiner als der maximale Strömungsquerschnitt (Qₘₐₓ) ausgebildeten Strömungsquerschnitt (Q_{Z}) freigibt und derart angeordnet ist, dass sich der Strömungsquerschnitt des Abgas-Strömungskanals (30) in Abgas-Strömungsrichtung mittels der Bremsklappe (12) düsenartig verringert und der an der Bremsklappe (12) vorbeiströmende Abgasstrom beschleunigt wird, wobei die in der Zwischenstellung (42) angeordnete Bremsklappe (12) einen Strömungsquerschnitt freigibt, der in einem Bereich von 0,1% bis 20% des maximalen Strömungsquerschnitts liegt, und wobei der an der Bremsklappe (12) vorbeiströmende Abgasstrom den einzigen zum Turbinenrad (43) strömenden Abgasstrom ausbildet.

2. Motorbremsvorrichtung nach Anspruch 1, **dadurch gekennzeichnet, dass** die Abgasturbine (8), insbesondere ein Turbinengehäuse der Abgasturbine (8), mit einem, über wenigstens einen, vorzugsweise über mehrere, Zylinder der Brennkraftmaschine (1) mit Abgas beaufschlagten Abgaskrümmer (6') strömungstechnisch gekoppelt ist, wobei zwischen der Abgasturbine (8) und dem Abgaskrümmer (6'), insbesondere zwischen einem Turbinengehäuse der Abgasturbine (8) und dem Abgaskrümmer (6'), und damit unmittelbar stromauf und außerhalb eines Turbinengehäuses der Abgasturbine (8) eine die Bremsklappe (12) aufweisende separate Baueinheit (28) verbaut ist.

3. Motorbremsvorrichtung nach Anspruch 1, **dadurch gekennzeichnet, dass** die Abgasturbine (8), insbesondere ein Turbinengehäuse der Abgasturbine (8), unmittelbar an einen, über wenigstens einen, vorzugsweise über mehrere, Zylinder der Brennkraftmaschine (1) mit Abgas beaufschlagten Abgaskrümmer (6) angebaut ist, und dass die Bremsklappe (12) im Bereich des Abgaskrümmers (6) und damit unmittelbar stromauf und außerhalb eines Turbinengehäuses der Abgasturbine (8) angeordnet ist.

4. Motorbremsvorrichtung nach Anspruch 2 oder 3, **dadurch gekennzeichnet, dass** die Bremsklappe (12) im Bereich eines Anschlussflansches (6a) eines Gehäuses der separaten Baueinheit (28) oder im Bereich eines Anschlussflansches (6a) des Abgaskrümmers (6), insbesondere an einem anschlussflanschseitigen Wandbereich des Gehäuses der separaten Baueinheit (28) oder des Abgaskrümmers (6), angeordnet ist, insbesondere dergestalt schwenkbar im Bereich oder an einem Anschlussflansch (6a) des Gehäuses der separaten Baueinheit (28) oder des Abgaskrümmers (6) zur Abgasturbine (8) angeordnet ist, dass sie im geöffneten Zustand den Abgasquerschnitt freigibt und im geschlossenen Zustand den Abgasquerschnitt vermindert.

5. Motorbremsvorrichtung nach einem der vorhergehenden Ansprüche, **dadurch gekennzeichnet, dass** die Bremsklappe (12) in einer Offenstellung, insbesondere im vollständig geöffneten Zustand, wenigstens mit einem freien Endbereich über den Anschlussflansch (6a) hinaus in den Einströmkanal (8b) der Abgasturbine (8) hineinragt.

6. Motorbremsvorrichtung nach einem der vorhergehenden Ansprüche, **dadurch gekennzeichnet, dass** bei einer mehrstufigen, insbesondere zweistufigen, Aufladung die Bremsklappe (12) stromauf einer in Strömungsrichtung gesehen ersten Abgasturbine eines ersten Abgasturboladers angeordnet ist und/oder dass jeder Flut der Abgasturbine (8) eine Bremsklappe (12) zugeordnet ist.

7. Motorbremsvorrichtung nach einem der vorhergehenden Ansprüche, **dadurch gekennzeichnet, dass** die Bremsklappe (12) im Motorbremsbetrieb (B) abhängig vom Abgasgegendruck (PA) stromauf der Bremsklappe (12) und/oder abhängig vom Ladedruck (PL) im Ansaugsystem (2) der Brennkraftmaschine (1) mittels einer Regel- und/oder Steuereinrichtung (18) gesteuert ist.

8. Motorbremsvorrichtung nach Anspruch 7, **dadurch gekennzeichnet, dass** zur Erfassung des Abgasgegendrucks (PA) ein Sensor (20), insbesondere ein Drucksensor, stromauf der Bremsklappe (12) im Abgassystem (3) angeordnet ist und/oder dass zur Erfassung des Ladedrucks (PL) ein Sensor (19), insbesondere ein Drucksensor, stromab eines Verdichters (9) im Bereich des Ansaugkrümmers (19) angeordnet ist.

9. Motorbremsvorrichtung nach Anspruch 8, **dadurch gekennzeichnet, dass** der Sensor (20) zur Erfassung des Abgasgegendrucks (PA) funktionell stromauf der Bremsklappe (12) angeordnet ist, dergestalt, dass der Sensor (20) entfernt und beabstandet von diesem stromauf liegenden Bereich angeordnet ist und über eine stromauf der Bremsklappe (12) in das Abgassystem (3) mündende Leitung (21) an den stromauf der Bremsklappe (12) liegenden Bereich angeschlossen ist, wobei bevorzugt vorgesehen ist, dass diese Leitung (21) als, bezogen auf eine Hochachsenrichtung, zum Sensor hin abfallende Leitung (21) ausgebildet ist.

10. Motorbremsvorrichtung nach einem der vorhergehenden Ansprüche, **dadurch gekennzeichnet, dass** zur Betätigung der Bremsklappe (12) ein von einer Steuer- und/oder Regeleinrichtung, insbesondere von einem elektronischen Motorsteuergerät (18), gesteuerter elektrischer Aktor vorgesehen ist oder alternativ ein, vorzugsweise pneumatisch beaufschlagter, Steller (15) und ein an diesen angeschlossenes Ventil vorgesehen ist.

11. Motorbremsvorrichtung nach Anspruch 10, **dadurch gekennzeichnet, dass** der Steuer- und/oder Regeleinrichtung, insbesondere dem elektronischen Motorsteuergerät (18), wenigstens ein die Motorbremsung einleitendes Bremssignal (B) und/oder ein Lastsignal (α) und/oder ein Abgasgegendruck (PA) und/oder ein Ladedruck (PL) im Ansaugsystem (4) zuführbar ist oder sind und damit abhängig von einer geforderten Motorbremsleistung zumindest die Stellung der Bremsklappe (12) regelbar ist.

12. Motorbremsvorrichtung nach einem der vorhergehenden Ansprüche, **dadurch gekennzeichnet, dass** eine Abgasrückführung vom Abgassystem (3) zum Ansaugsystem (4) mit einem, vorzugsweise elektrisch oder pneumatisch gesteuerten, Abgasrückführventil (24) in einer Abgasrückführleitung (23) vorgesehen ist.

13. Motorbremsvorrichtung nach einem der vorhergehenden Ansprüche, **dadurch gekennzeichnet, dass** eine Dekompressionsbremswirkung durch den Abgasgegendruck (PA) gesteuert ist oder dass eine Dekompressionsbremswirkung durch eine der Ventilsteuerung überlagerte, vorzugsweise elektrisch oder pneumatisch oder hydraulisch gesteuerte, Vorrichtung bewirkt ist.

14. Motorbremsvorrichtung nach einem der vorhergehenden Ansprüche, **dadurch gekennzeichnet, dass** die Bremsklappe (12) in ihrer Offenstellung, in der sie den vollen Querschnitt der Ausströmöffnung freigibt, wenigstens bereichsweise oberflächenbündig mit einer Kanalwand (32) eines die Ausströmöffnung ausbildenden Abgas-Strömungskanals (30) angeordnet ist, vorzugsweise die Bremsklappe (12) in einer wandseitigen Vertiefung (31) aufgenommen ist und/oder einliegt und im Wesentlichen oberflächenbündig an die unmittelbar an die Vertiefung (31) angrenzenden Wandbereiche (33) der Kanalwand (32) eines die Ausströmöffnung ausbildenden Abgas-Strömungskanals (30) anschließt.

15. Motorbremsvorrichtung nach einem der vorhergehenden Ansprüche, **dadurch gekennzeichnet, dass** die in der Zwischenstellung angeordnete Bremsklappe (12) einen Strömungsquerschnitt freigibt, der in einem Bereich von 1% bis 12%, bevorzugt von 1,3% bis 11,1%, des maximalen Strömungsquerschnitts liegt.

16. Verfahren zum Betreiben einer Motorbremsvorrichtung für eine Brennkraftmaschine (1) in Kraftfahrzeugen, wobei die Motorbremsvorrichtung ein Ansaugsystem (2), ein Abgassystem (3), brennkraftmaschinenseitige Gaswechselventile, eine Abgasturboaufladung mittels zumindest eines in das Abgassystem (3) und das Ansaugsystem (2) integrierten ein- oder mehrflutig ausgebildeten Abgasturboladers (7) sowie eine Motorbremseinrichtung aufweist, wobei die Motorbremseinrichtung eine wenigstens ein Auslassventil der Gaswechselventile beeinflussende Dekompressionsbremse und jede Flut eine im Abgassystem angeordnete, das Abgas rückstauende Bremsklappe (12) aufweist, und wobei die Bremsklappe (12) unmittelbar stromauf und außerhalb eines Turbinengehäuses einer Abgasturbine (8) des Abgasturboladers (7) angeordnet ist, **dadurch gekennzeichnet, dass** die Bremsklappe (12) eine Strömungsleitklappe ausbildet, mittels der die Abgasturbine (8) in Abhängigkeit von der Stellung der Bremsklappe (12) mit einem definierten Gasstrom beaufschlagt wird, wobei die Bremsklappe (12) im Motorbremsbetrieb in einer Zwischenstellung (42) zwischen einer Offenstellung (29) und einer Schließstellung (36) angeordnet wird, in der die Bremsklappe (12) einen kleiner als der maximale Strömungsquerschnitt (Qₘₐₓ) ausgebildeten Strömungsquerschnitt (Q_{Z}) freigibt und derart angeordnet ist, dass sich der Strömungsquerschnitt des Abgas-Strömungskanals (30) in Abgas-Strömungsrichtung mittels der Bremsklappe (12) düsenartig verringert und der an der Bremsklappe (12) vorbeiströmende Abgasstrom beschleunigt wird, wobei die in der Zwischenstellung (42) angeordnete Bremsklappe (12) einen Strömungsquerschnitt freigibt, der in einem Bereich von 0,1% bis 20% des maximalen Strömungsquerschnitts liegt, und wobei der an der Bremsklappe (12) vorbeiströmende Abgasstrom den einzigen zum Turbinenrad (43) strömenden Abgasstrom ausbildet.

17. Verfahren nach Anspruch 16, **dadurch gekennzeichnet, dass** die in der Zwischenstellung angeordnete Bremsklappe (12) einen Strömungsquerschnitt freigibt, der in einem Bereich von 1% bis 12%, bevorzugt von 1,3% bis 11,1%, des maximalen Strömungsquerschnitts liegt.

18. Verfahren nach Anspruch 16 oder 17, **dadurch gekennzeichnet, dass** die Bremsklappe (12) im Nicht-Motorbremsbetrieb einen ersten Strömungsquerschnitt, vorzugsweise den maximalen Strömungsquerschnitt, freigibt, und dass die Bremsklappe (12) im Motorbremsbetrieb einen kleiner als der erste Strömungsquerschnitt ausgebildeten zweiten Strömungsquerschnitt freigibt.

19. Fahrzeug mit einer Motorbremsvorrichtung nach einem der Ansprüche 1 bis 15.

## Claims

1. Engine braking device for a combustion engine (1) in motor vehicles, which has an intake system (2), an exhaust system (3), gas exchange valves associated with the combustion engine, exhaust turbocharging by means of at least one exhaust turbocharger (7) integrated into the exhaust system (3) and the intake system (2) and of single-flow or multi-flow design, and an engine braking unit, wherein the engine braking unit has a decompression brake, which influences at least one outlet valve of the gas exchange valves, and each flow has a brake flap (12), which is arranged in the exhaust system and causes the exhaust gas to build up, and wherein the brake flap (12) is arranged directly upstream of and outside a turbine housing of an exhaust turbine (8) of the exhaust turbocharger (7), **characterized in that** the brake flap (12) is designed as a flow guiding flap which influences the admission of a gas flow to the exhaust turbine (8) and which, in the engine braking mode, is arranged in an intermediate position (42) between an open position (29) and a closed position (36), in which intermediate position the brake flap (12) opens up a flow cross section (Q_{Z}) smaller than the maximum flow cross section (Qₘₐₓ) and is arranged such that the flow cross section of the exhaust flow duct (30) narrows in the manner of a nozzle in the exhaust flow direction by means of the brake flap (12) and the exhaust flow flowing past the brake flap (12) is accelerated, wherein the brake flap (12) arranged in the intermediate position (42) opens up a flow cross section which lies in a range from 0.1% to 20% of the maximum flow cross section, and wherein the exhaust flow flowing past the brake flap (12) forms the only exhaust flow flowing to the turbine wheel (43).

2. Engine braking device according to Claim 1, **characterized in that** the exhaust turbine (8), in particular a turbine housing of the exhaust turbine (8), is coupled fluidically to an exhaust manifold (6'), to which the exhaust gas is admitted via at least one, preferably a plurality of, cylinders of the combustion engine (1), wherein a separate module (28) having the brake flap (12) is installed between the exhaust turbine (8) and the exhaust manifold (6'), in particular between a turbine housing of the exhaust turbine (8) and the exhaust manifold (6'), and hence directly upstream of and outside a turbine housing of the exhaust turbine (8).

3. Engine braking device according to Claim 1, **characterized in that** the exhaust turbine (8), in particular a turbine housing of the exhaust turbine (8), is mounted directly on an exhaust manifold (6), to which the exhaust gas is admitted via at least one, preferably a plurality of, cylinders of the combustion engine (1), and **in that** the brake flap (12) is arranged in the region of the exhaust manifold (6) and hence directly upstream of and outside a turbine housing of the exhaust turbine (8).

4. Engine braking device according to Claim 2 or 3, **characterized in that** the brake flap (12) is arranged in the region of a connecting flange (6a) of a housing of the separate module (28) or in the region of a connecting flange (6a) of the exhaust manifold (6), in particular on a wall region of the housing of the separate module (28) or of the exhaust manifold (6) which is adjacent to the connecting flange, the brake flap being, in particular, arranged pivotably in such a way, in the region of or on a connecting flange (6a) of the housing of the separate module (28) or of the exhaust manifold (6) leading to the exhaust turbine (8), that it exposes the exhaust gas cross section in the open state and reduces the exhaust gas cross section in the closed state.

5. Engine braking device according to one of the preceding claims, **characterized in that** the brake flap (12) projects beyond the connecting flange (6a) into the inflow duct (8b) of the exhaust turbine (8), at least by means of a free end region, in an open position, in particular in the completely open state.

6. Engine braking device according to one of the preceding claims, **characterized in that**, in the case of multi-stage, in particular two-stage charging, the brake flap (12) is arranged upstream of a first exhaust turbine of a first exhaust turbocharger, as seen in the direction of flow, and/or **in that** each flow of the exhaust turbine (8) is assigned a brake flap (12).

7. Engine braking device according to one of the preceding claims, **characterized in that**, in the engine braking mode (B), the brake flap (12) is controlled by means of a closed-loop and/or open-loop control device (18) in a manner dependent on the exhaust gas backpressure (PA) upstream of the brake flap (12) and/or in a manner dependent on the boost pressure (PL) in the intake system (2) of the combustion engine (1).

8. Engine braking device according to Claim 7, **characterized in that** a sensor (20), in particular a pressure sensor, is arranged in the exhaust system (3) upstream of the brake flap (12) in order to detect the exhaust gas backpressure (PA) and/or **in that** a sensor (19), in particular a pressure sensor, is arranged downstream of a compressor (9), in the region of the intake manifold (19), in order to detect the boost pressure (PL).

9. Engine braking device according to Claim 8, **characterized in that** the sensor (20) for detecting the exhaust gas backpressure (PA) is arranged functionally upstream of the brake flap (12), such that the sensor (20) is arranged remote from and spaced apart from this upstream region and is connected to the region situated upstream of the brake flap (12) by a line (21) which opens into the exhaust system (3) upstream of the brake flap (12), wherein provision is preferably made for said line (21) to be designed as a line (21) which falls towards the sensor, relative to the direction of a vertical axis.

10. Engine braking device according to one of the preceding claims, **characterized in that**, to actuate the brake flap (12), an electric actuator controlled by an open-loop and/or closed-loop control device, in particular by an electronic engine control unit (18), is provided or, alternatively, a positioner (15), preferably a pneumatically actuated positioner, and a valve connected thereto are provided.

11. Engine braking device according to Claim 10, **characterized in that** at least one brake signal (B), which initiates the engine braking, and/or a load signal (α) and/or an exhaust gas backpressure (PA) and/or a boost pressure (PL) in the intake system (4) can be fed to the open-loop and/or closed-loop control device, in particular to the electronic engine control unit (18), and at least the position of the brake flap (12) can be controlled thereby in accordance with a demanded engine braking power.

12. Engine braking device according to one of the preceding claims, **characterized in that** exhaust gas recirculation from the exhaust system (3) to the intake system (4) with an exhaust gas recirculation valve (24), preferably controlled electrically or pneumatically, in an exhaust gas recirculation line (23) is provided.

13. Engine braking device according to one of the preceding claims, **characterized in that** a decompression braking effect is controlled by the exhaust gas backpressure (PA) or **in that** a decompression braking effect is brought about by a device which is superimposed on the valve control and which is preferably electrically or pneumatically or hydraulically controlled.

14. Engine braking device according to one of the preceding claims, **characterized in that** the brake flap (12), in its open position in which it opens up the full cross section of the outflow opening, is at least regionally arranged superficially flush with a duct wall (32) of an exhaust flow duct (30) which forms the outflow opening, preferably, the brake flap (12) is received and/or lies in a depression (31) in the wall and, in a substantially superficially flush manner, adjoins those wall regions (33) of the duct wall (32) of an exhaust flow duct (30) which forms the outflow opening which directly adjoin the depression (31).

15. Engine braking device according to one of the preceding claims, **characterized in that** the brake flap (12) arranged in the intermediate position opens up a flow cross section which lies in a range from 1% to 12%, preferably from 1.3% to 11.1%, of the maximum flow cross section.

16. Method for operating an engine braking device for a combustion engine (1) in motor vehicles, wherein the engine braking device has an intake system (2), an exhaust system (3), gas exchange valves associated with the combustion engine, exhaust turbocharging by means of at least one exhaust turbocharger (7) integrated into the exhaust system (3) and the intake system (2) and of single-flow or multi-flow design, and an engine braking unit, wherein the engine braking unit has a decompression brake, which influences at least one outlet valve of the gas exchange valves, and each flow has a brake flap (12), which is arranged in the exhaust system and causes the exhaust gas to build up, and wherein the brake flap (12) is arranged directly upstream of and outside a turbine housing of an exhaust turbine (8) of the exhaust turbocharger (7), **characterized in that** the brake flap (12) forms a flow guiding flap, by means of which a defined gas flow is admitted to the exhaust turbine (8) in accordance with the position of the brake flap (12) wherein the brake flap (12), in the engine braking mode, is arranged in an intermediate position (42) between an open position (29) and a closed position (36), in which intermediate position the brake flap (12) opens up a flow cross section (Q_{Z}) smaller than the maximum flow cross section (Qₘₐₓ) and is arranged such that the flow cross section of the exhaust flow duct (30) narrows in the manner of a nozzle in the exhaust flow direction by means of the brake flap (12) and the exhaust flow flowing past the brake flap (12) is accelerated, wherein the brake flap (12) arranged in the intermediate position (42) opens up a flow cross section which lies in a range from 0.1% to 20% of the maximum flow cross section, and wherein the exhaust flow flowing past the brake flap (12) forms the only exhaust flow flowing to the turbine wheel (43).

17. Method according to Claim 16, **characterized in that** the brake flap (12) arranged in the intermediate position opens up a flow cross section which lies in a range from 1% to 12%, preferably from 1.3% to 11.1%, of the maximum flow cross section.

18. Method according to Claim 16 or 17, **characterized in that** the brake flap (12), in the non-engine braking mode, opens up a first flow cross section, preferably the maximum flow cross section, and **in that** the brake flap (12), in the engine braking mode, opens up a second flow cross section smaller than the first flow cross section.

19. Vehicle having an engine braking device according to one of Claims 1 to 15.

## Revendications

1. Dispositif de frein moteur pour un moteur à combustion interne (1) dans des véhicules automobiles, qui présente un système d'admission (2), un système de gaz d'échappement (3), des soupapes d'échange de gaz du côté du moteur à combustion interne, une turbocompression de gaz d'échappement au moyen d'au moins un turbocompresseur à gaz d'échappement (7) intégré dans le système de gaz d'échappement (3) et dans le système d'admission (2), réalisé à un ou plusieurs flux, ainsi qu'un dispositif de frein moteur, le dispositif de frein moteur présentant un frein à décompression influençant au moins une soupape de sortie des soupapes d'échange de gaz et chaque flux présentant un clapet de frein (12) disposé dans le système de gaz d'échappement, refoulant le gaz d'échappement, et le clapet de frein (12) étant disposé directement en amont et à l'extérieur d'un carter de turbine d'une turbine à gaz d'échappement (8) du turbocompresseur à gaz d'échappement (7), **caractérisé en ce que** le clapet de frein (12) est réalisé sous forme de clapet de guidage d'écoulement influençant la sollicitation de la turbine à gaz d'échappement (8) par un flux de gaz, lequel clapet de guidage d'écoulement est disposé en mode de frein moteur dans une position intermédiaire (42) entre une position ouverte (29) et une position fermée (36), dans laquelle le clapet de frein (12) libère une section transversale d'écoulement (Q_{Z}) réalisée de manière à être inférieure à la section transversale d'écoulement maximale (Qₘₐₓ) et est disposé de telle sorte que la section transversale d'écoulement du canal d'écoulement de gaz d'échappement (30) diminue en forme de buse dans la direction d'écoulement du gaz d'échappement au moyen du clapet de frein (12) et que le flux de gaz d'échappement s'écoulant devant le clapet de frein (12) soit accéléré, le clapet de frein (12) disposé dans la position intermédiaire (42) libérant une section transversale d'écoulement qui est comprise dans une plage de 0,1 % à 20 % de la section transversale d'écoulement maximale, et le flux de gaz d'échappement s'écoulant devant le clapet de frein (12) constituant le seul flux de gaz d'échappement s'écoulant vers la roue de turbine (43).

2. Dispositif de frein moteur selon la revendication 1, **caractérisé en ce que** la turbine à gaz d'échappement (8) en particulier un carter de turbine de la turbine à gaz d'échappement (8), est accouplée par une liaison fluidique à un collecteur de gaz d'échappement (6') sollicité avec du gaz d'échappement par le biais d'au moins un, et de préférence plusieurs, cylindres du moteur à combustion interne (1), une unité structurelle séparée (28) présentant le clapet de frein (12) étant montée entre la turbine à gaz d'échappement (8) et le collecteur de gaz d'échappement (6'), en particulier entre un carter de turbine de la turbine à gaz d'échappement (8) et le collecteur de gaz d'échappement (6'), et donc directement en amont et à l'extérieur d'un carter de turbine de la turbine à gaz d'échappement (8).

3. Dispositif de frein moteur selon la revendication 1, **caractérisé en ce que** la turbine à gaz d'échappement (8), en particulier un carter de turbine de la turbine à gaz d'échappement (8), est montée directement au niveau d'un collecteur de gaz d'échappement (6) sollicité avec du gaz d'échappement par le biais d'au moins un, de préférence par le biais de plusieurs, cylindres du moteur à combustion interne (1), et **en ce que** le clapet de frein (12) est disposé dans la région du collecteur de gaz d'échappement (6) et donc directement en amont et à l'extérieur d'un carter de turbine de la turbine à gaz d'échappement (8).

4. Dispositif de frein moteur selon la revendication 2 ou 3, **caractérisé en ce que** le clapet de frein (12) est disposé dans la région d'une bride de raccordement (6a) d'un boîtier de l'unité structurelle séparée (28) ou dans la région d'une bride de raccordement (6a) du collecteur de gaz d'échappement (6), en particulier au niveau d'une région de paroi, du côté de la bride de raccordement, du boîtier de l'unité structurelle séparée (28) ou du collecteur de gaz d'échappement (6), en particulier est disposé de manière à pouvoir pivoter dans la région, ou au niveau, d'une bride de raccordement (6a) du boîtier de l'unité structurelle séparée (28) du collecteur de gaz d'échappement (6) vers la turbine à gaz d'échappement (8) de telle sorte que dans l'état ouvert, il libère la section transversale de gaz d'échappement et que dans l'état fermé, il réduise la section transversale de gaz d'échappement.

5. Dispositif de frein moteur selon l'une quelconque des revendications précédentes, **caractérisé en ce que** le clapet de frein (12), dans une position ouverte, en particulier dans l'état complètement ouvert, pénètre au moins avec une région d'extrémité libre au-delà de la bride de raccordement (6a) dans le canal d'afflux (8b) de la turbine à gaz d'échappement (8).

6. Dispositif de frein moteur selon l'une quelconque des revendications précédentes, **caractérisé en ce que** dans le cas d'une suralimentation à plusieurs étages, en particulier à deux étages, le clapet de frein (12) est disposé, vu dans la direction d'écoulement, en amont d'une première turbine à gaz d'échappement d'un premier turbocompresseur à gaz d'échappement et/ou **en ce qu'**à chaque flux de la turbine à gaz d'échappement (8) est associé un clapet de frein (12).

7. Dispositif de frein moteur selon l'une quelconque des revendications précédentes, **caractérisé en ce que** le clapet de frein (12), en mode de frein moteur (B), est commandé en fonction de la contre-pression de gaz d'échappement (PA) en amont du clapet de frein (12) et/ou en fonction de la pression de charge (PL) dans le système d'admission (2) du moteur à combustion interne (1) au moyen d'un dispositif de régulation et/ou de commande (18).

8. Dispositif de frein moteur selon la revendication 7, **caractérisé en ce que** pour la détection de la contre-pression de gaz d'échappement (PA), un capteur (20), en particulier un capteur de pression, est disposé en amont du clapet de frein (12) dans le système de gaz d'échappement (3) et/ou **en ce que** pour détecter la pression de charge (PL), un capteur (19), en particulier un capteur de pression, est disposé en aval d'un compresseur (9) dans la région du collecteur d'admission (19).

9. Dispositif de frein moteur selon la revendication 8, **caractérisé en ce que** le capteur (20) pour détecter la contre-pression de gaz d'échappement (PA) est disposé fonctionnellement en amont du clapet de frein (12) de telle sorte que le capteur (20) soit disposé à distance et de manière éloignée de la région située en amont de celui-ci et soit raccordé à la région située en amont du clapet de frein (12) par le biais d'une conduite (21) débouchant en amont du clapet de frein (12) dans le système de gaz d'échappement (3), et de préférence cette conduite (21) étant réalisée sous forme de conduite (21) descendant vers le capteur par rapport à une direction d'axe vertical.

10. Dispositif de frein moteur selon l'une quelconque des revendications précédentes, **caractérisé en ce que** pour l'actionnement du clapet de frein (12), il est prévu un actionneur électrique commandé par un dispositif de commande et/ou de régulation, en particulier par un appareil électronique de commande de moteur (18), ou en variante il est prévu un dispositif de réglage (15) de préférence sollicité pneumatiquement et une soupape raccordée à celui-ci.

11. Dispositif de frein moteur selon la revendication 10, **caractérisé en ce qu'**au moins un signal de frein (B) amorçant le freinage moteur et/ou un signal de charge (α) et/ou une contre-pression de gaz d'échappement (PA) et/ou une pression de charge (PL) peut ou peuvent être acheminés dans le système d'admission (4) au dispositif de commande et/ou de régulation, en particulier à l'appareil électronique de commande de moteurs (18), et au moins la position du clapet de frein (12) peut ainsi être réglée en fonction d'une puissance de frein moteur exigée.

12. Dispositif de frein moteur selon l'une quelconque des revendications précédentes, **caractérisé en ce qu**'une recirculation de gaz d'échappement depuis le système de gaz d'échappement (3) vers le système d'admission (4), avec une soupape de recirculation de gaz d'échappement (24) commandée de préférence électriquement ou pneumatiquement, est prévue dans une conduite de recirculation des gaz d'échappement (23).

13. Dispositif de frein moteur selon l'une quelconque des revendications précédentes, **caractérisé en ce qu'**un effet de frein à décompression est commandé par la contre-pression de gaz d'échappement (PA) ou **en ce qu'**un effet de frein à décompression est provoqué par un dispositif superposé à la commande de soupape, de préférence commandé électriquement ou pneumatiquement ou hydrauliquement.

14. Dispositif de frein moteur selon l'une quelconque des revendications précédentes, **caractérisé en ce que** le clapet de frein (12), dans sa position ouverte dans laquelle il libère toute la section transversale de l'ouverture de sortie, est disposé au moins en partie en affleurement avec la surface d'une paroi de canal (32) d'un canal d'écoulement de gaz d'échappement (30) constituant l'ouverture de sortie, de préférence le clapet de frein (12) est reçu et/ou s'insère dans un renfoncement (31) du côté de la paroi et se raccorde essentiellement en affleurement avec la surface des régions de paroi (33) de la paroi de canal (32), immédiatement adjacente au renfoncement (31), d'un canal d'écoulement (30) de gaz d'échappement constituant l'ouverture de sortie.

15. Dispositif de frein moteur selon l'une quelconque des revendications précédentes, **caractérisé en ce que** le clapet de frein (12), disposé dans la position intermédiaire, libère une section transversale d'écoulement qui est située dans une plage de 1 % à 12 %, de préférence de 1,3 % à 11, 1 % de la section transversale d'écoulement maximale.

16. Procédé pour faire fonctionner un dispositif de frein moteur pour un moteur à combustion interne (1) dans des véhicules automobiles, le dispositif de frein moteur présentant un système d'admission (2), un système de gaz d'échappement (3), des soupapes d'échange de gaz du côté du moteur à combustion interne, une turbocompression de gaz d'échappement au moyen d'au moins un turbocompresseur à gaz d'échappement (7) intégré dans le système de gaz d'échappement (3) et dans le système d'admission (2), réalisé à un ou plusieurs flux, ainsi qu'un dispositif de frein moteur, le dispositif de frein moteur présentant un frein à décompression influençant au moins une soupape de sortie des soupapes d'échanges de gaz et chaque flux présentant un clapet de frein (12) disposé dans le système de gaz d'échappement, refoulant le gaz d'échappement, et le clapet de frein (12) étant disposé directement en amont et à l'extérieur d'un carter de turbine d'une turbine à gaz d'échappement (8) du turbocompresseur à gaz d'échappement (7), **caractérisé en ce que** le clapet de frein (12) est réalisé sous forme de clapet de guidage d'écoulement au moyen duquel la turbine à gaz d'échappement (8) est sollicitée en fonction de la position du clapet de frein (12) avec un flux de gaz défini, le clapet de frein (12), en mode de frein moteur, étant disposé dans une position intermédiaire (42) entre une position ouverte (29) et une position fermée (36), dans laquelle le clapet de frein (12) libère une section transversale d'écoulement (Q_{Z}) réalisée de manière à être inférieure à la section transversale d'écoulement maximale (Qₘₐₓ) et est disposé de telle sorte que la section transversale d'écoulement du canal d'écoulement de gaz d'échappement (30) diminue en forme de buse dans la direction d'écoulement du gaz d'échappement au moyen du clapet de frein (12) et que le flux de gaz d'échappement s'écoulant devant le clapet de frein (12) soit accéléré, le clapet de frein (12) disposé dans la position intermédiaire (42) libérant une section transversale d'écoulement qui est comprise dans une plage de 0,1 % à 20 % de la section transversale d'écoulement maximale, et le flux de gaz d'échappement s'écoulant devant le clapet de frein (12) constituant le seul flux de gaz d'échappement s'écoulant vers la roue de turbine (43).

17. Procédé selon la revendication 16, **caractérisé en ce que** le clapet de frein (12) disposé dans la position intermédiaire libère une section transversale d'écoulement qui est située dans une plage de 1 % à 12 %, de préférence de 1,3 % à 11,1 % de la section transversale d'écoulement maximale.

18. Procédé selon la revendication 16 ou 17, **caractérisé en ce que** le clapet de frein (12), lorsqu'il n'est pas en mode de frein moteur, libère une première section transversale d'écoulement, de préférence la section transversale d'écoulement maximale, et **en ce que** le clapet de frein (12), en mode de frein moteur, libère une deuxième section transversale d'écoulement réalisée de manière à être inférieure à la première section transversale d'écoulement.

19. Véhicule comprenant un dispositif de frein moteur selon l'une quelconque des revendications 1 à 15.
